(19)

Europäisches
Patentamt
European
Patent Office
Office européen
des brevets

(11) **EP 2 383 951 A2**

(12) **EUROPEAN PATENT APPLICATION**

(43) Date of publication:
**02.11.2011 Bulletin 2011/44**

(51) Int Cl.:
**H04L 27/26** (2006.01)

(21) Application number: **11075067.6**

(22) Date of filing: **20.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**BA**

(30) Priority: **20.06.2006 EP 06115705**

(71) Applicant: **Alcatel Lucent**
**75007 Paris (FR)**

(72) Inventor: **Jaenecke, Peter**
**75334 Straubenhardt (DE)**

(74) Representative: **Kleinbub, Oliver et al**
**Alcatel-Lucent Deutschland AG**
**Intellectual Property & Standards**
**Lorenzstrasse 10**
**70435 Stuttgart (DE)**

(54) **OFDM clipping using sidebands and up-sampling**

(57)   The invention concerns a method for clipping a wideband radio signal in the time domain at a predefined threshold defining the maximum magnitude of the signal, where a difference signal for clipping is determined and subtracted such that the difference signal concentrates spectral interference in one or more unused subcarrier outside the used band. The invention further concerns a clipping unit for clipping a wideband radio signal in the time domain at a predefined threshold defining the maximum magnitude of the signal, the clipping unit comprising signal processing means for performing the method of one of the previous claims. And the invention concerns a power amplifier unit comprising the clipping unit. The invention concerns also a network element like a node B comprising the clipping unit.

Prefixed, First-Clipped OFDM Symbol (Time Domain, Increased Sample Rate) $\tilde{s}^{up*}$
Original Signal s

14

1 Calculate the $\gamma^{old}$
2 Calculate the new $\gamma$'s with eq (16)
3 Calculate the hard clipping correction signal $h_c$
4 Calculate the $\delta\gamma$'s
5 Calculate the new "old" $\gamma$'s
6 Repeat step 2 for n iterations

220

Prefixed, Clipped & EVMF Optimized OFDM Symbol
(Time Domain, Increased Sample Rate)

15

Fig. 5

EP 2 383 951 A2

**Description**

The present invention relates to the field of wireless communication systems for transmitting digital multi-carrier signals. In particular, the invention relates to the reducing the Peak-to-Average-Power-Ratio (PAPR) for systems and methods using Orthogonal Frequency Division Multiplex (OFDM).

A disadvantage in using transmission techniques like OFDM is the large PAPR of the transmitted signals, for it decreases the efficiency of the transmitter power amplifier. To reduce PAPR, normally the signals are clipped in the time domain combined with a filtering procedure, which compensates the spectrum impairments done by clipping.

The spectrum impairments are a crucial point for OFDM signals, which are based on coding the data as spectrum lines in the frequency domain. Especially the higher modulations like 16 or 64 Quadrature Amplitude Modulation (QAM) are highly sensitive to adulterations of the spectrum lines.

The technical problem is to find a clipping method, which produces for a predefined PAPR a minimum error for the spectrum lines.

Clipping is a well-known method for reducing the PAPR in the digital transmit path of transmitters which use a data coding in the time domain like, for e.g., Wideband Code Division Multiple Access (WCDMA) systems.

Several methods are known, see e.g. AWATER ET AL.: Transmission system and method employing peak cancellation to reduce the peak-to-average power ratio. U.S. Patent No. 6,175,551 or DARTOIS, L.: Method for clipping a wideband radio signal and corresponding transmitter, as is European Patent Pub. No. 1 195 892 suggests to clip the signal peaks by subtracting a predefined clipping function when a given power threshold is exceeded. In order to ensure that clipping does not cause any out-of-band interference, a function is selected having approximately the same bandwidth as the transmitted signal. This is called soft-clipping.

These methods are not optimal for OFDM signals: In avoiding out-of-band interference they corrupt the spectral lines.

Further methods to reduce PAPR are described in JAENECKE, PETER; STRAUSS, JENS AND DARTOIS, LUC: Method of scaling power amplitudes in a signal and corresponding transmitter/ Non-linear Method of Employing Peak Cancellation to Reduce Peak-to-Average Power Ratio. EP Patent Application No. 02360252.7, or FARNESE, DOMENICO: Techniques for Peak Power Reduction in OFDM Systems. Master Thesis Chalmer University of Technology, Academic Year 1997-1998.

Coding schemes use known block codes in OFDM systems with constant-modulus constellations. The block code removes some constellation combinations. If those combinations happen to produce large peaks, the coded system will have a smaller maximum peak than the uncoded version. These methods do not impair the signal quality; they are a desirable approach for systems with a small number of carriers. But as the number of carriers increases, coding schemes become intractable since the memory needed to store the code block and the CPU time needed to find the corresponding code word grows drastically with the number of carriers.

Usually constellation points that lead to high-magnitude time signals are generated by correlated bit patterns, for example, a long string of ones or zeros. Therefore, by selective scrambling the input bit streams, may reduce the probability of large peaks generated by those bit patterns. The method is to form four code words in which the first two bits are 00, 01, 10 and 11 respectively. The message bits are first scrambled cyclically by four fixed equivalent m-sequences. Then the one with the lowest PAPR is selected and one of the pair of bits defined earlier is appended at the beginning of the selected sequence. At the receiver, these first two bits are used to select the suitable descrambler. PAPR is typically reduced to 2% of the maximum possible value while incurring negligible redundancy in a practical system. However, an error in the bits that encode the choice of scrambling sequence may lead to long propagation of decoding errors.

For the tone reservation method a small subset of subcarriers are reserved for optimizing the PAPR. The objective is to find the time domain signal to be added to the original time domain signal x such that the PAPR is reduced. Let be $X$ the Fourier transformation from $x$, c the time domain signal that is used to reduce the PAPR, and C its Fourier transformation. Then x+c is the "clipped" signal in the time domain and $X + C$ its counterpart in the frequency domain. It is assume that in C only few elements (subcarriers) are different from zero. These subcarriers are reserved for the clipping purpose, i.e. they must be zero in the signal $X$.

The advantage is that this method is distortionless with respect to the data to be transmitted. However, the method has serious disadvantages:

(a) Clipping In the time domain at one point, or at some points means, in general, in the frequency domain changes for all subcarriers. Reserving only some of them makes the PAPR reduction suboptimal.

(b) If in an OFDM symbol the reserved subcarriers belong to the occupied subcarriers, then a loss of data rata appears, whereas the spectrum remains nearly unchanged. If, however, the reserved subcarriers belong to the non-occupied subcarriers, then the data rate is unchanged, whereas the Adjacent Channel Power Ratio (ACPR) requirements and/or the spectrum mask may be violated. A definition of ACPR can be found for instance in http://de.wikipedia.org/wiki/Adjacent_Channel_Power.

Research is being done for tackling with problem of PAPR and several techniques are proposed such as clipping, peak windowing, coding, pulse shaping, tone reservation and tone injection etc. But, most of these methods are unable to achieve simultaneously a large reduction in PAPR with low complexity, with low coding overhead, without performance degradation and without transmitter receiver symbol handshake.

This patent application discloses a method to overcome the stated problems by a method for clipping signals in the time domain at a predefined threshold defining the maximum magnitude of the signal, such that unused sparse subcarriers are used for compensating clipping interference.

Correspondingly the problem is solved by a clipping unit and a corresponding power amplifier unit.

The basic idea behind the invention is that unused subcarriers as well as the cyclic prefix and the ramping region give degrees of freedom to find an optimal clipped OFDM signal in which the undesirable clipping side effects are compensated. The claimed method for PAPR reduction produces for a predefined PAPR a minimum error vector magnitude (EVM) in the frequency domain.

Practically the signal processing in a transmitter requires data rates at 91 MHz and higher. Because of the computational complexity of the method it is not practicable to clip the signal at these high data rates. Clipping at a low data rate combined with a subsequent up-sampling, however, leads to an overshooting of the signal magnitude above the pre-defined clipping threshold, i.e., it partly negates the clipping result.

The problem to identify clipping method allowing clipping at a lower data rate without producing an appreciable overshooting of the signal magnitude after up-sampling is disclosed as a preferred embodiment.

The basic idea is to combine up-sampling to a predefined low data rate, clipping, and EVM minimization. The mean EVM in the frequency domain can be predefined by selecting a predefined clipping threshold.

The major advantage of the invention is that the peak-to-average Ratio is about 5.5 - 6.5 db for a signal with full dynamic range, and under the constraints that the EVM equirement and the spectrum emission mask are kept. The mean power is left nearly unchanged by dipping.

The following figures illustrate the preferred realization of the present invention:

Fig. 1 gives an overview about the processing units und the main data flow.
Fig. 2 shows the processing units for preparing the input signal for the peak-to-average power reduction processing.
Fig. 3 gives an overview about the processing units up-sampling, EVM optimization and dipping.
Fig. 4 gives an overview about the up-sampling and first clipping unit.
Fig. 5 gives an overview about the EVM optimization and clipping unit.

The increased efficiency pays off the relatively high necessary computational power. The following figures illustrate these effects, where

Fig. 6 shows a clipped and unclipped WIMAX OFDM symbol in the time domain.
Fig. 7 shows a clipped and unclipped WIMAX OFDM signal in the frequency domain.
Fig. 8 shows the impairment of a WIMAX OFDM signal in the time domain [equation (15)] before EVM optimization.
Fig. 9 shows the same signal as shown in Fig. 8 after EVM optimization.
Fig. 10 shows the impairment of WIMAX OFDM from Fig. 8 in the frequency domain before EVM optimization.
Fig. 11 shows the same signal as shown in Fig. 10 after EVM optimization.

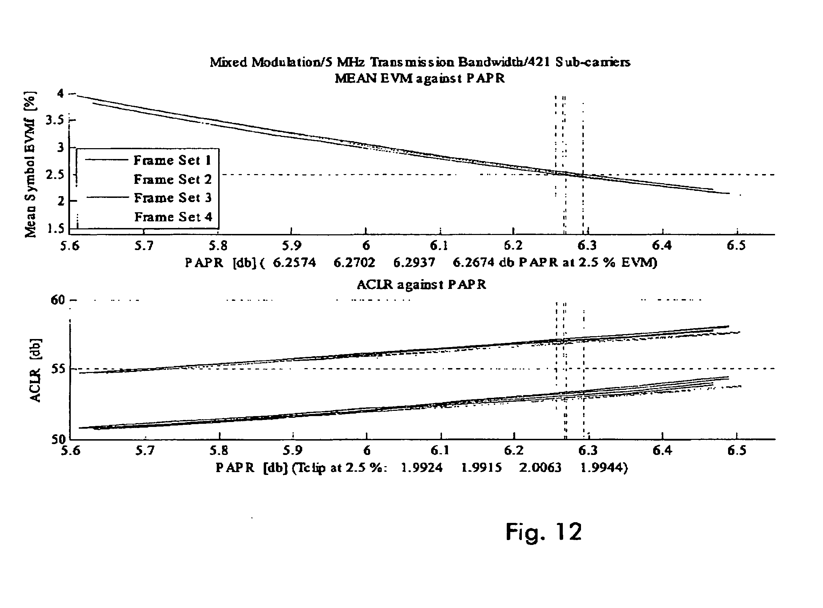

Fig. 12 illustrates effectiveness of the EVM minimization in plotting EVM and Adjacent Channel Leakage Power Ration (ACLR) against the Peak-to-Average Power Reduction (PAPR).

For illustration purpose it is assumed to clip an OFDM signal. There are a lot of different OFDM formats. The solution presented here is exemplified with a WIMAX OFDM signal at 5 MHz signal bandwidth and 64 QAM modulation. It can be straight forward adapted to any other OFDM standard of this family.

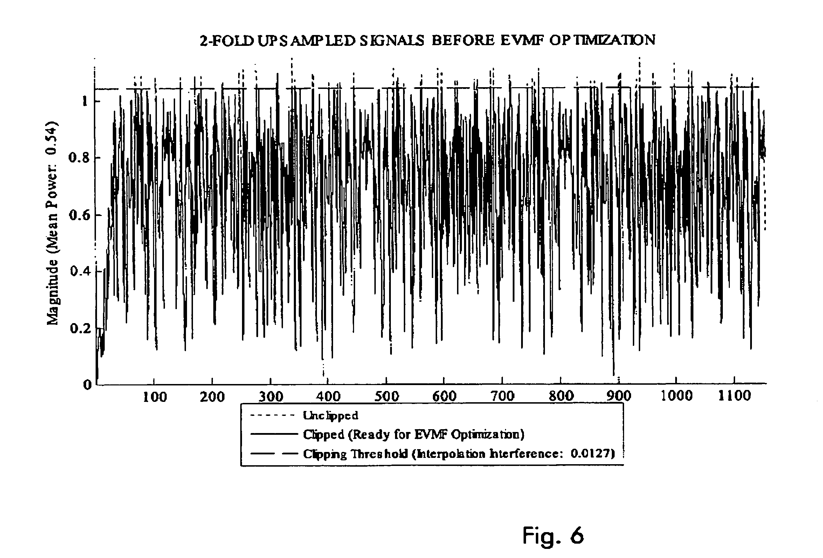

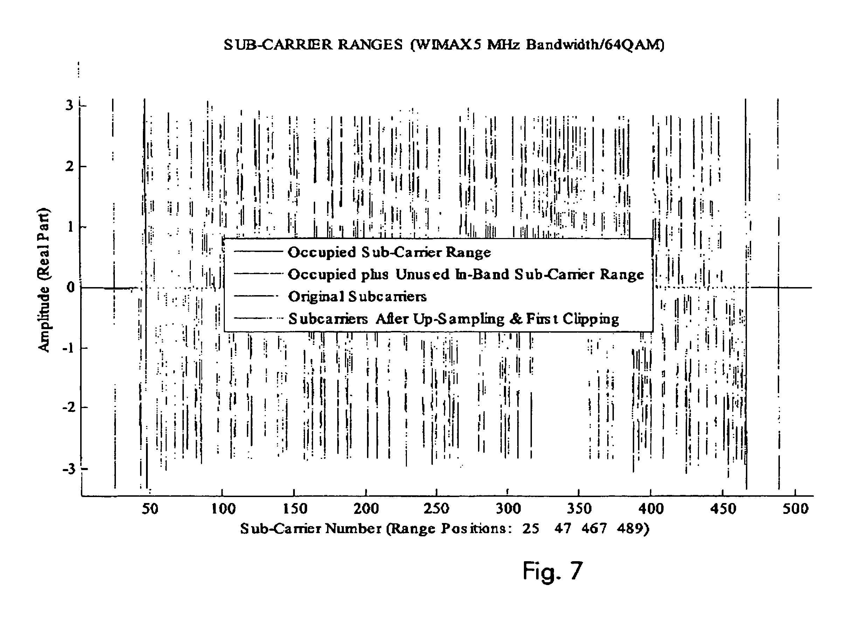

A WIMAX OFDM symbol for a transmission bandwidth of 5 MHz consists of 512 subcarriers from which 421 subcarriers (#47 - #467) are only occupied. The data of the subcarriers are coded as spectrum lines in the frequency domain as shown in Fig 7. After an inverse Fourier transformation a cyclic prefix is added to the signal in the time domain (Fig. 6). To improve the spectrum quality a linear or non-linear ramping can be made within the cyclic prefix.

*Description of the signals used*

Let be

$$(1) \qquad S_n(l), \; l=1,2,...,l_{FFT}$$

the nth symbol in the frequency domain, shown in Fig. 7, and

$$(2) \qquad s_n(l) =_l T_l S_n(l), \; l=1,2,...,l_{FFT}$$

its inverse Fourier transformation; $l_{FFT}$ is the length of the Fourier transformation ($l_{FFT}$=512 for OFDM symbols at a 5 MHz transmission bandwidth). The symbol $s_n$ from the second equation (2) represents the OFDM symbol in the time domain without a cyclic prefix. The cyclic prefix is added to symbol $s_n$ according to

$$(3) \qquad \tilde{s}_n(l) = \{s_n[l_{FFT} - l_{pf}(n)+1],...,s_n(l_{FFT})\} \cup s_n(l), \; l=1,2,...,l_{FFT} ,$$

where $l_{pf}(n)$ is the cyclic prefix length of symbol n. Additionally, the transmitted unclipped signal $\tilde{s}_n$ may be ramped linearly or non-linearly in a predefined ramping zone. The unclipped symbol is denoted by $\tilde{s}_n$ (whether ramped or not), this signal has to be clipped.

The result of clipping is the signal

$$(4) \qquad \tilde{s}_n^c(l) = \{s_n^c[l_{FFT} - l_{pf}(n)+1],...,s_n^c(l_{FFT})\} \cup s_n^c(l), \; l=1,2,...,l_{FFT} .$$

The data recovery in the receiver comprises the following steps: In the clipped signal $\tilde{s}_n^c$ the prefix has to be omitted; this yields to the OFDM symbol

$$(5) \qquad s_n^c(l) \; l=1,2,...,l_{FFT} ,$$

which is the clipped version of symbol $s_n$ from the second equation (2). Its Fourier transformation

$$S_n^C(l) =_l T_l s_n^c(l) \; l=1,2,...,l_{FFT}$$

leads to the clipped OFDM symbol in the frequency domain.

Preferably the method is subdivided into two parts, (i) into an up-sampling and first clipping step, and (ii) into an EVM minimization and second clipping step.

*Part 1: Up-sampling and first clipping*

Up-sampling Constraint: In order to extend the bandwidth (which is needed, e.g. to pre-distort the signal after clipping) the data rate has to be increased. This is normally done by interpolating the signal in one or more filtering steps. Each filtering, however, thwarts the clipping effort in producing signals, which overshoot the clipping threshold. The oim of this part is to merge up-sampling and a first clipping step, in order to reduce the overshooting caused by interpolation.

For describing the first part let be

$$(6) \qquad \tilde{s}_n(t_j) \; j=1,2,...,L(n)$$

the $n$th time domain symbol in a sub-frame at the basic sampling frequency $r_0$; e.g., $r_0$ = 5.60 or 7.68 MHz for signal transmission bandwidth 5 MHz;

$$L(n) = l_{FFT} + l_{pf}(n)$$

is its length; it consists of the FFT (fast Fourier Transformation) length $l_{FFT}$ and the prefix length. Up-sampling at the factor u > 1 is normally done with the following steps: (i) initialization

$$\tilde{s}_n^{up}(j) = 0; \quad j = 1, 2, ..., L_u(n); \quad L_u(n) = u \cdot L(n)$$

$$\tilde{s}_n^{up}(1 + u \cdot m) = \tilde{s}_n(m+1); \quad m = 0, 1, ..., L(n) - 1,$$

and, (ii) convolution of signal $\tilde{s}_n^{up}$ with an appropriate interpolation filter $f_u$, where the convoluted signal is given by

$$\bar{\sigma}_n^{up}(N_{fuh} + i) = \sum_{j=1}^{N_{fu}} f_u(j) \cdot \tilde{s}_n^{up}(i + j - 1) \quad i = 1, 2, ...,$$

and where $N_{fu}$ is preferably the (odd) length of the interpolation filter; $N_{fuh} = floor(0.5 \ast N_{fu})$ is the "half" length. With

$$n_f = N_{fuh} + i, \quad i = n_f - N_{fuh}$$

we get the unclipped up-sampled signal

$$(7) \quad \bar{\sigma}_n^{up}(n_f) = \sum_{j=1}^{N_{fu}} f_u(j) \cdot \tilde{s}_n^{up}(n_f - N_{fuh} + j - 1), \quad n_f = N_{fuh} + 1, N_{fuh} + 2, ....$$

Assume that

$$|\bar{\sigma}_n^{up}(n_f)| > T_{clip},$$

where $T_{clip}$ is the aforementioned predefined clipping threshold. Then $\tilde{s}_n^{up}(n_f)$ must be reduced by a certain $\delta s$, i.e.

$$\tilde{s}_n^{up'}(n_f) = \tilde{s}_n^{up}(n_f) - \delta s,$$

which leads to

$$(8) \qquad \tilde{\sigma}_n^{upc}(n_f) = \tilde{\sigma}_n^{up}(n_f) - \delta\sigma \cdot f_c(N_{fcb}+1) ,$$

where $\tilde{\sigma}_n^{upc}(n_f)$ is given by the clipping condition

$$(9) \qquad \tilde{\sigma}_n^{upc}(n_f) = \frac{T_{clip} \cdot \tilde{\sigma}_n^{up}(n_f)}{|\tilde{\sigma}_n^{up}(n_f)|} .$$

The centre of the filter is at $j_{center}=N_{fuh}+1$; in the convolution (8) the centre belongs to sample $\tilde{s}_n^{up}(n_f)$. If we substitute in signal $\tilde{s}_n^{up}$ at $n_f$ sample $\tilde{s}_n^{up}(n_f)$ by sample

$$(10) \qquad \tilde{s}_n^{up*}(n_f) = \tilde{s}_n^{up}(n_f) - \underbrace{\frac{\delta\sigma}{f_u(N_{fuh}+1)} f_c(N_{fcb}+1)}_{\delta s}$$

we get because of equation (8)

$$\tilde{\sigma}_n^{up*}(n_f) = \tilde{\sigma}_n^{up}(n_f) - \delta\sigma \cdot f_c(N_{fcb}+1) = \tilde{\sigma}_n^{upc}(n_f) .$$

Clipping of the up-sampled interpolation level means, therefore, clipping of the unfiltered zero-padded level according to equation (11); because of

$$\delta\sigma \cdot f_c(N_{fcb}+1) = \tilde{\sigma}_n^{up}(n_f) - \tilde{\sigma}_n^{upc}(n_f)$$

and equation (10) $\delta\sigma$ is given by

$$(11) \qquad \delta\sigma = \frac{\tilde{\sigma}_n^{up}(n_f)}{f_c(N_{fcb}+1)}\left(1 - \frac{T}{|\sigma_n^{up}(n_f)|}\right).$$

The reduction defined in equation (11) can be done as hard clipping, or as soft clipping. In case of hard clipping, only the sample at $n_f$ is modified; in case of soft clipping, the sample at $n_f$ and samples around it are modified according of a predefined clipping function $f_c$.

One aspect of the present invention is that if the need of a clipping procedure on the up-sampled interpolation level appears, then clipping can be performed on the unfiltered zero-padded level in such a way that the clipping condition is fulfilled at $n_f$ after interpolation. This is achieved e.g. by using equation (11).

In order to simplify the representation it is assumed that $f_c(N_{fcb}+1)=1$ and that the clipping function $f_c$ and the interpolation filter $f_u$ have the same length, i.e.,

$$N_{fu} = N_{fc} = N_f , \quad N_{fuh} = N_{fch} = N_{fh} .$$

From equation (8) we get

$$\check{\sigma}_n^{upc}(n_f) = \sum_{j=-N_{fh}}^{+N_{fh}} f_u(N_{fh}+1+j)\cdot\left[\check{s}_n^{up}(n_f+j)-\delta s\cdot f_c(N_{fh}+j+1)\right],$$

with

$$\check{\sigma}_n^{up}(n_f) = \sum_{j=-N_{fh}}^{+N_{fh}} f_u(N_{fh}+1+j)\cdot\check{s}_n^{up}(n_f+j).$$

It follows that

$$(12)\quad \check{\sigma}_n^{upc}(n_f)=\check{\sigma}_n^{up}(n_f)-\kappa_0\cdot\delta s,$$

where

$$\kappa_0 = \sum_{j=-N_{fh}}^{+N_{fh}} f_u(N_{fh}+1+j)\cdot f_c(N_{fh}+1+j).$$

Equating the clipping condition (10) with equation (13) one gets

$$\frac{T\cdot\check{\sigma}_n^{up}(n_f)}{|\check{\sigma}_n^{up}(n_f)|}=\check{\sigma}_n^{up}(n_f)-\kappa_0\cdot\delta s,$$

$$\kappa_0\cdot\delta s=\check{\sigma}_n^{up}(n_f)-\frac{T\cdot\check{\sigma}_n^{up}(n_f)}{|\check{\sigma}_n^{up}(n_f)|},$$

or

$$\delta s=\frac{1}{\kappa_0}\check{\sigma}_n^{up}(n_f)\left[1-\frac{T}{|\check{\sigma}_n^{up}(n_f)|}\right].$$

Sample $n_f$ was clipped before interpolation filtering, i.e., it was corrected according to equation (11). Normally, a re-filtering is required for the soft clipped part of all those $\check{s}_n^{up}$, which were already interpolated. In order to avoid a re-filtering, $\delta s$ is determined in such a way that for the interpolated sample $n_f$ holds $|\check{\sigma}_n^{upc}(n_f)|=T_{clip}$. It is only necessary to compute the correction for all other already interpolated samples, which are situated in the clipping filter range $n_f - N_{fh},...,n_f+0$, i.e.,

$$\tilde{\sigma}_n^{upc}(n_f - k) \quad \text{for} \quad k = 0, ..., +N_{fh}.$$

Soft clipping of the already interpolated samples is preferred. For the already interpolated samples a soft clipping of the signal $\tilde{s}_n^{up}$ is pretended, i.e., it is not really clipped, rather, the implications are simulated to the Interpolated signal in case signal $\tilde{s}_n^{up}$ would have been clipped. In using equation (8) we get for k = 1

$$\tilde{\sigma}^{up}(n_f - 1) = \sum_{j=1}^{N_f} f_u(j) \cdot \tilde{s}_n^{up}(n_f - N_{fh} + j - 2) =$$

$$= f_u(1)\tilde{s}_n^{up}(n_f - N_{fh} - 1) + f_u(2)\tilde{s}_n^{up}(n_f - N_{fh}) + ... + f_u(N_{fh})\tilde{s}_n^{up}(n_f - 2) +$$

$$+ f_u(N_{fh} + 1)\tilde{s}_n^{up}(n_f - 1) + f_u(N_{fh} + 2)\tilde{s}_n^{up}(n_f) + .... + f_u(N_f)\tilde{s}_n^{up}(n_f + N_{fh} - 1)$$

Sample $\tilde{s}_n^{up}(n_f - N_{fuh} - 1)$ is out of the clipping range which starts at $n_f$ - $N_{fh}$; i.e.,

$$\tilde{\sigma}_n^{upc}(n_f - N_{fh} - 1) = \tilde{\sigma}_n^{up}(n_f - N_{fh} - 1).$$

Thus,

$$\bar{\sigma}_n^c(n_f - 1) = f_u(1)\,\bar{s}_n(n_f - N_{fh} - 1) +$$

$$+ \sum_{j=-N_{fh}+1}^{+N_{fh}} f_u(N_{fh} + 1 + j) \cdot \left[ \bar{s}_n(n_f + j - 1) - \delta s \cdot f_c(N_{fh} + j) \right]$$

or,

$$\bar{\sigma}_n^c(n_f - 1) = \bar{\sigma}_n(n_f - 1) - \delta s \left( \sum_{j=-N_{fh}+1}^{+N_{fh}} f_u(N_{fh} + 1 + j) \cdot f_c(N_{fh} + j) \right).$$

The general solution is

$$\tilde{\sigma}_n^{upc}(n_f - k) = \tilde{\sigma}_n^{up}(n_f - k) - \delta s \left( \sum_{j=-N_{fh}+k}^{+N_{fh}} f_u(N_{fh} + j - k + 1) \cdot f_c(N_{fh} + j - k + 1) \right),$$

or

$$( 13) \quad \tilde{\sigma}_n^{upc}(n_f - k) = \tilde{\sigma}_n^{up}(n_f - k) - \kappa_k \cdot \delta s,$$

where

$$(14) \quad \kappa_k = \sum_{j=-N_{fh}+k}^{+N_{fh}} f_u(N_{fh}+1+j) \cdot f_c(N_{fh}+j-k+1), \quad k = 0,1,...,N_{fh}.$$

All samples which fall into the clipping range, but which are not interpolated can be clipped as usual by a convolution

$$\tilde{s}_n^{up*}(n_f+k) = \tilde{s}_n^{up}(n_f+k) - \delta s \cdot f_c(N_{fh}+k+1); \quad k = 1,2,...,N_{fh}.$$

An example for the output of part 1 is given in Fig. 6 and Fig. 7.

*Part 2 EVM Optimization and Second Clipping*

Identifying an optimum clipping is treated as a minimum problem under constraints.

*- Minimum Condition*

The minimum condition requires that the occupied subcarriers should be disturbed as less as possible, whereas the non-occupied subcarriers do not underlie any restriction. A preferred minimum condition follows from the properties of the Fourier transformation (the index n for indicating the symbol number is omitted in the following description):
The Fourier transformation S(1), ..., $S(l_{fft})$ from signal s(1), ..., s($l_{fft}$) can be calculated by means of the Fourier Matrix f according to

$$f * s = S,$$

where '$*$' denotes the matrix multiplication. Let be

$$(15) \quad \gamma_j = \tilde{s}^{up*}(j) - s(j); \quad j = 1,2,...,l_{fft}$$

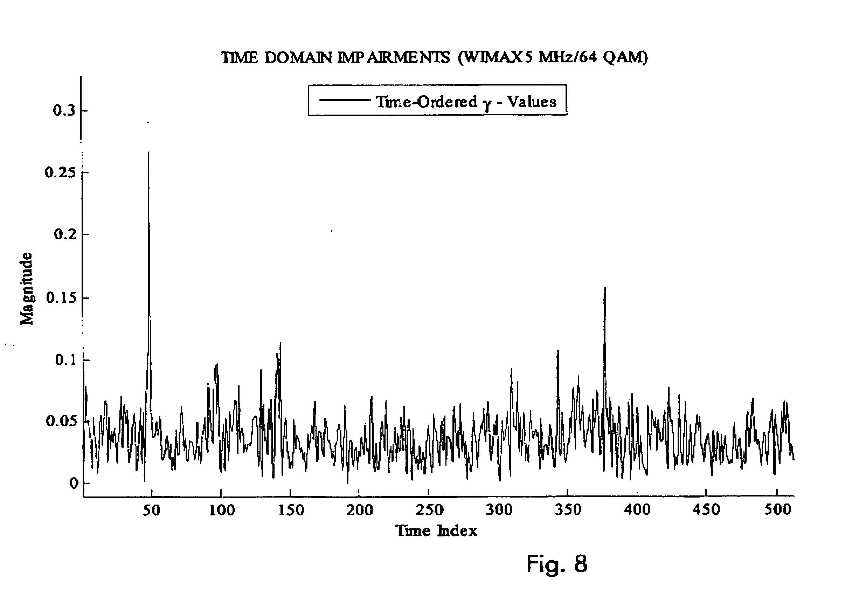

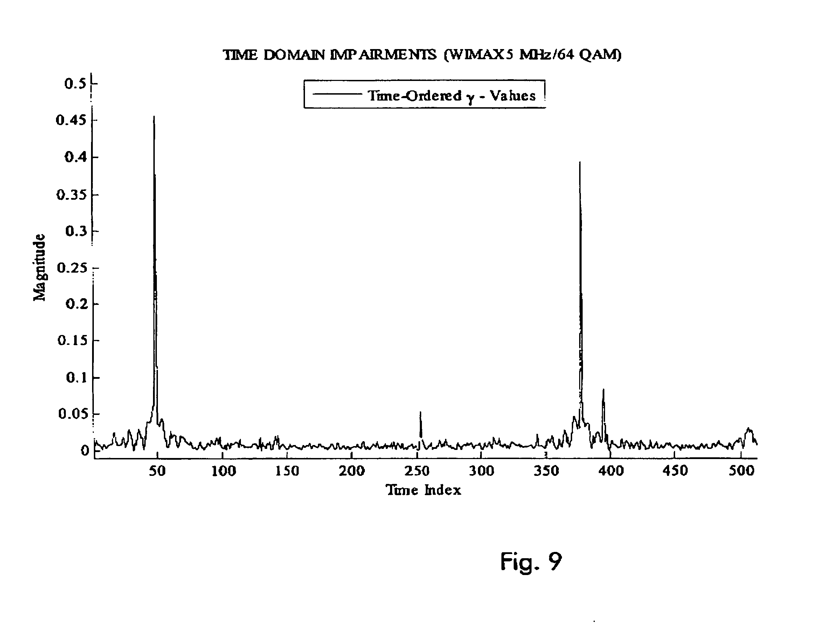

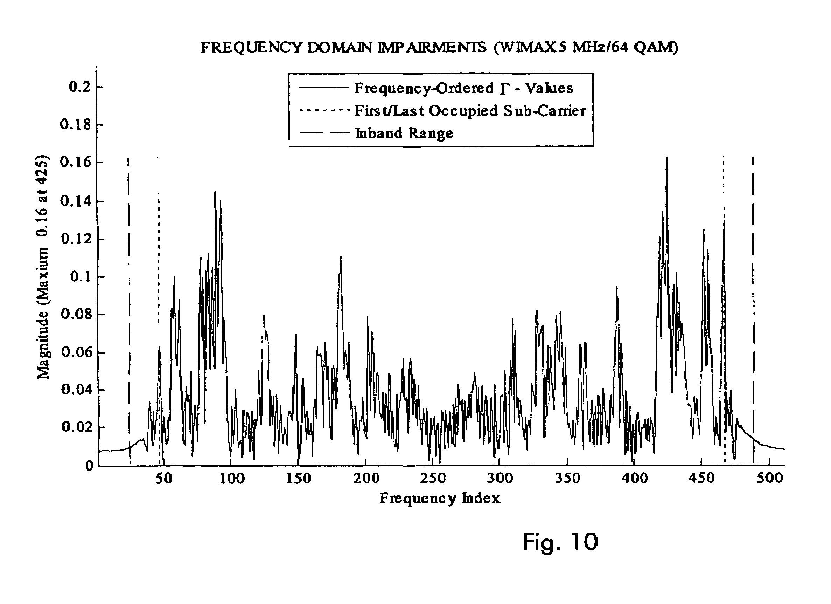

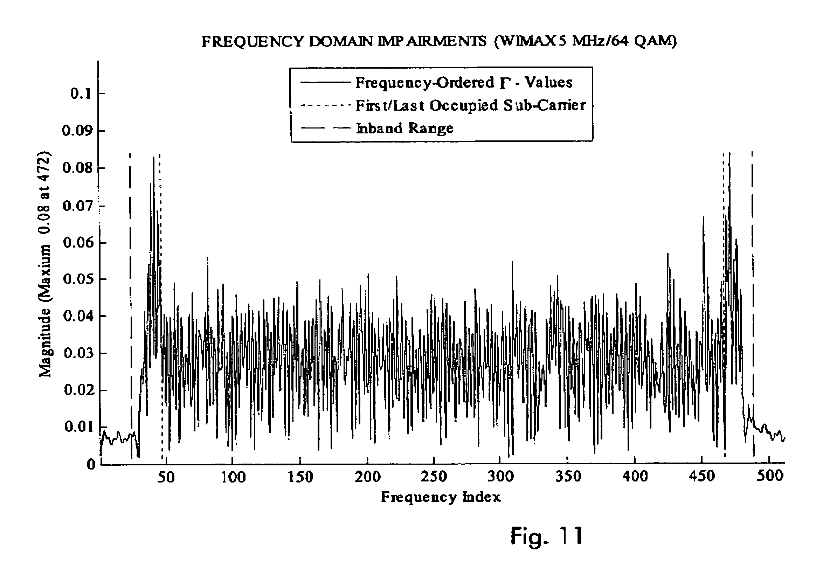

where $\tilde{s}^{up*}(j)$ is the $J^{th}$ sample of the output from the up-sampling and first clipping unit for any OFDM symbol, and where s(j) is the $J^{th}$ sample of the inverse Fourier transformation about the sub-carriers, i.e., $\gamma_1,...,\gamma_{l_{fft}}$ is the error vector in the time domain (Fig. 8, Fig. 9). The Fourier transformation of it (Fig. 10, Fig. 11) yields the error vector in the frequency domain, which is responsible for the EVM. In optimizing EVM, the contributions in this vector must be minimized. The function

$$M(\gamma_k) = \sum_{z=\lambda_1}^{\lambda_2} \left| \sum_{j=1}^{l_{fft}} f_{zj}\gamma_j^{old} - f_{zk} \gamma_k^{old} + f_{zk} \gamma_k \right|^2; \quad k = 1,2,...,l_{fft}$$

is used as a preferred measure for minimizing the errors produced by clipping and filtering; $\lambda_1$ is the number of the first occupied sub-carrier, and $\lambda_2$ the number of the last sub-carrier. From

$$\frac{\partial M(\gamma_k)}{\partial \gamma_k} = 2 \sum_{z=\lambda_1}^{\lambda_2} \left( \sum_{j=1}^{l_{fft}} f_{zj} \gamma_j{}^{old} - f_{zk} \gamma_k{}^{old} + f_{zk} \gamma_k \right) \cdot f_{zk}{}^* = 0$$

it follows

$$\gamma_k = \gamma_k{}^{old} - \frac{1}{r(k)} \sum_{j=1}^{l_{fft}} \gamma_j{}^{old} \left( \sum_{z=\lambda_1}^{\lambda_2} f_{zj} \cdot f_{zk}{}^* \right),$$

respectively,

$$(16) \quad \gamma_k = \gamma_k{}^{old} - \sum_{j=1}^{l_{fft}} \gamma_j{}^{old} \, t_{jk}; \qquad k = 1, 2, ..., l_{fft}$$

where

$$t_{sk} = \frac{1}{r(k)} \sum_{z=\lambda_1}^{\lambda_2} f_{zs} \cdot f_{zk}{}^* , \text{ and } r(k) = \sum_{z=\lambda_1}^{\lambda_2} |f_{zk}|^2 .$$

It holds

$$imag(t_{sk}) \approx 0 \quad (s,k = 1, 2, ..., l_{fft}),$$

and

$$(17) \quad V_k = rotate(v_1, k-1), \quad k = 1, 2, ..., l_{fft} .$$

where

$$(18) \quad v_1 = [t_{11}, t_{12}, ..., t_{1,l_{fft}}] ,$$

so that instead of the matrix $t$ the vector $v_1$ can be used. In a preferred implementation, the vector $v_1$ is shortened additionally, in order to reduce the computational complexity, i.e. that the required computational effort is limited.

*Optional extensions:*

(i) Optionally, a development of the $y_k$ can be used. It is calculated in applying equation (16) iteratively. As an example, the second step of the development is calculated as follows: Given is the result of the first step,

$$\gamma_k{}^{(1)} = \gamma_k{}^{old} - \sum_{j=1}^{l_m} \gamma_j{}^{old} \, t_{jk} \, .$$

The second step is defined by equation (16) as

$$\gamma_k{}^{(2)} = \gamma_k{}^{(1)} - \sum_{j=1}^{l_m} \gamma_j{}^{(1)} \, t_{jk} \, .$$

Inserting in this equation the first step result $y_k{}^{(1)}$ yields immediately $y_k{}^{(2)}$ , etc.

(ii) Imitation of the tone reservation approach (WIMAX). In equation (16) the

$$\text{sum } \sum_{s=\lambda_i}^{\lambda_n} \text{ can be replaced by } \sum_{s \in \Lambda} \, ,$$

where A is the index set for the occupied sub-carrier. I.e., on demand, all sub-carriers can be omitted in the sum, which are reserved (according the WIMAX standard) for the tone reservation.

(iii) Altenatively, a constraint condition can be introduced in such a way that

$$EVM(k) \leq T_{EVMf}; \quad k = 1, 2, ..., l_m$$

for each symbol, where $T_{EVMf}$ is a predefined threshold, which restricts EVM of sample k to the limit of $T_{EVMf}$ %.

*Constraints*

There are three types of constraints concerning *clipping threshold, spectrum mask requirement,* and *continuation condition:*

*Clipping Constraint:* It is assumed that the mean power is normalized to a pre-defined value. The clipping constraint says that

$$|\bar{s}_a^{\,c}(l)| \leq T_{clip}, \quad l = 1, 2, ..., L(n)$$

must hold, where *L(n)* is the length of the *nth* OFDM symbol in a frame, and $T_{clip}$ is the predefined clipping threshold. Then, $T_{clip}$, resp., $T_{clip}^2$ defines the maximum magnitude, resp., maximum power of the clipped signal.

*Spectrum Emission Mask Constraint:* The spectrum emission mask constraint is defined as

$$D_m \leq M(m), \quad m = 1, 2, ..., L_M \, ,$$

where $M(1),...,M(L_M)$ is a predefined spectrum emission mask, and

$$D_m = 20\log_{10}[|\tilde{S}_a^c(m)|], \quad m = 1, 2, ..., L_M$$

is the power spectrum density. The length of the mask, $L_M$, refers to the frequency range outside of the signal bandwidth.

*Continuation Constraint:* The continuation constraint refers to the continuation of clipped symbols in the time domain. Because the spectrum emission mask condition is applied to a restricted number of symbols, preferential to only one symbol, a soft change over must be ensured in concatenating two symbols with each other.

Part 2 could be realized as an iterative procedure (iteration), which requires normally seesaw changes between the Fourier transformation and its inverse, because the EVM optimization and spectrum emission mask control is done in the frequency domain, whereas clipping is done in the time domain.

In the preferred embodiment of the second part the minimum formula (16) is used with which changes between the domains can be avoided, since the y's give immediately a correction in the time domain. The minimum formula (16) can be realized as an FIR (finite impulse response) filter *V* defined by its filter coefficients ( 17), i.e.,

$$\gamma_k^{old} - \gamma_k = V_k \circ \gamma^{old}; \quad k = 1, 2, ..., l_{fft},$$

where the sign 'o' denotes an FIR filtering. However, EVM optimization may violate the spectrum emission mask. Further on, in correcting the signal by the y's the clipping constraint may be violated. This effect can be corrected by calculating a signal $h_c$, which makes a hard clipping according

$$|s - h_c| \leq T_{clip}.$$

Thus, there are two signals which impair the spectrum: the y's and $h_c$. Therefore, a pulse-shaping filter is applied to the sum of both signals to ensure the spectrum quality. To fulfil the spectrum emission mask constraint a pulse shaping with filter P is performed. Then change of the y's is given by

$$\delta\gamma = P \circ (\gamma^{old} - \gamma + h_c),$$

where P$oh_c$, corresponds to a soft clipping procedure. There are some implementation-depending simplifications like unifying the P and V filters. The continuation constraint is reached automatically by pulse shaping filtering beyond the borders of a single OFDM symbol.

From this it follows principle for the preferred embodiment the following iterative approach:

1. Calculate the old gammas

$$\gamma^{old} = \tilde{s}^{up'} - s$$

where $\tilde{s}^{up'}$ is the output from the up-sampling and first clipping unit for any OFDM symbol, and where s is the inverse Fourier transformation about the sub-carriers.

2. Calculate the new gammas from the old one according

$$\gamma_k = \gamma_k^{old} - \sum_{j=1}^{l_{fft}} \gamma_j^{old}\, l_{jk}; \quad k = 1, 2, ..., l_{fft}.$$

3. Calculate the hard clipping correction signal $h_c$ in such a way that

$$|s - h_c| \leq T_{clip}.$$

4. Calculate the amount, the old y's has to be corrected according to

$$\delta\gamma = P \circ (\gamma^{old} - \gamma + h_c).$$

5. Calculate new "old" y's according to

$$\gamma^{old(new)} = \gamma^{old} + \delta\gamma.$$

6. Repeat at step 2 until any stop criteria is fulfilled, e.g. a fix point is reached or a defined number of iterations have been performed.

An example for the iteration is given in Fig. 8 - Fig. 11: Fig. 8 and Fig. 9 show the gammas in the time domain at the begin and end of the iteration; Fig.10 and Fig.11 show the Fourier transformation of the y's, i.e. the impairments in the frequency domain before and after EVM minimizing.

*Potential extensions:*

(i) As said above, the spectrum emission mask constraint is ensured by pulse shaping filtering. The pulse shaping filter for all transmission bandwidths together with further interpolation filters are calculated separately by means of an optimization procedure in such a way that (a) a pre-defined spectrum emission mask is just fulfilled, and that (b) the complete clipping system gives the best possible EVM, i.e., the filter coefficients are optimized by means of the system which uses these filters.

(ii) The iterative approach described above can also be applied to a multi-carrier case. The basic idea is (a) to perform the frequency shift of the y's and the filters as required for the corresponding multi-carrier case, so that the iteration path can be passed for each carrier; and (b) to add the components after filtering. Additionally, a special hard clipping module could calculate the $h_c$ signals for each carrier.

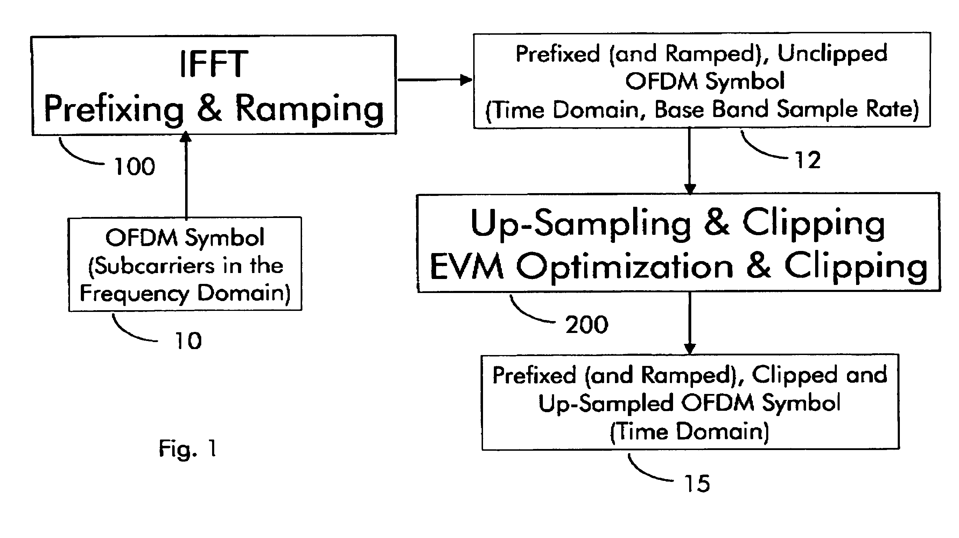

Fig. 1 shows the peak to average power reduction overview of the described method. An OFDM symbol represented as sub-carriers in the frequency domain 10 is sent to an Inverse Fourier transformation and prefixing unit 100, which generates a prefixed, and, if required, ramped OFDM symbol in the time domain 12.

This signal 12 is sent to the peak-to-average power reduction unit 200, consisting of an up-sampling and clipping step and an EVM Optimization and clipping step. The output of unit 200 is an OFDM signal 15, which is ready for a further up-sampling followed by a pre-distortion.

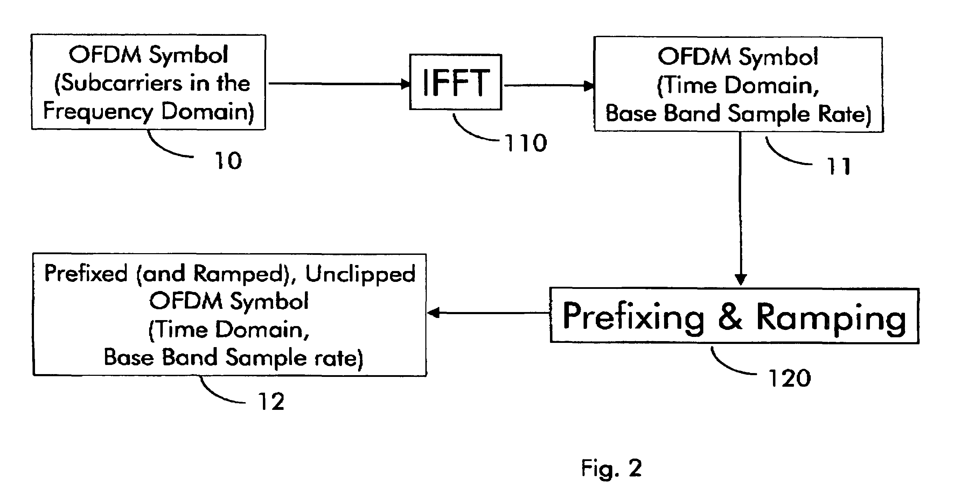

Fig. 2 shows the signal preparation. An OFDM symbol represented as sub-carriers in the frequency domain 10 is sent to an Inverse Fourier Transformation Unit 110, which generates an OFDM Symbol in the time domain 11. In the prefixing and ramping unit 120 the OFDM Symbol in the time domain 11 is prefixed, and, if required, ramped yielding the prefixed, ramped and unclipped OFDM Symbol in the time domain 12.

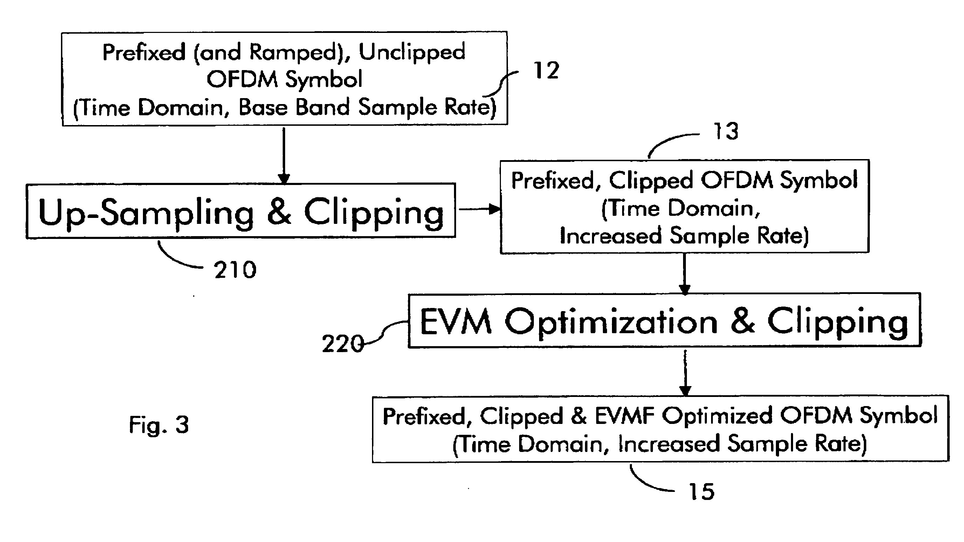

Fig. 3 shows a Peak-to-Average Power Reduction Block. A prefixed and unclipped OFDM symbol 12 is sent to the up-sampling and clipping sub-unit 210; it yields a first-step clipped OFDM symbol in the time domain 13 with an Increased sample rate. This signal 13 is sent to the EVM optimization and clipping sub-unit 220; it yields a prefixed, clipped and EVM optimized OFDM symbol 15, which is ready for a further up-sampling followed by a pre-distortion.

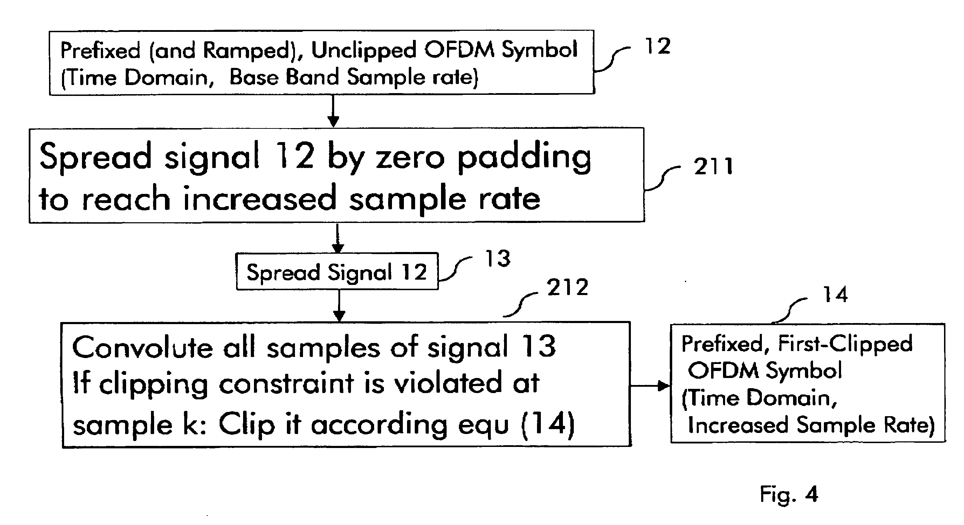

Fig. 4 shows an Up-sampling and first clipping procedure. A prefixed and unclipped OFDM symbol 12 is sent to the up-sampling and clipping sub-unit 210; it yields a first-step clipped OFDM symbol in the time domain 13 with an increased sample rate. This signal 13 is sent to the EVM optimization and clipping sub-unit 220; it yields a prefixed, clipped and EVM optimized OFDM symbol, which is read for a further up-sampling followed by a pre-distortion.

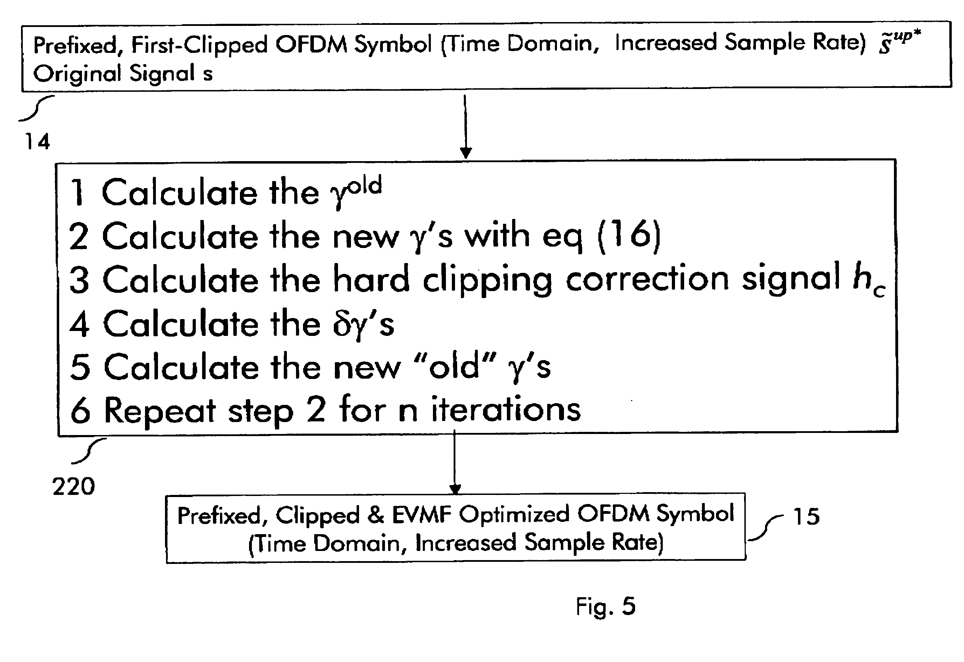

Fig. 5 shows the EVM Optimization and clipping procedure. A prefixed and unclipped OFDM symbol 12 is sent to the up-sampling and clipping sub-unit 210; it yields a first-step clipped OFDM symbol in the time domain 13 with an increased sample rate. This signal 13 is sent to the EVM optimization and clipping sub-unit 220; it yields a prefixed, clipped and EVM optimized OFDM symbol, which is read for a further up-sampling followed by a pre-distortion.

## Claims

1. A method for clipping a wideband radio signal in the time domain at a predefined threshold defining the maximum magnitude of the signal, **characterized in that** a difference signal for clipping is determined and subtracted such that the difference signal concentrates spectral interference in one or more unused subcarrier outside the used band.

2. The method according to claim 1, **characterized in that** the error vector magnitude is minimized or restricted to be less than a predefined threshold by the difference signal.

3. The method according to claim 1, **characterized in that** the spectral interference is concentrated in a subset of subcarriers are reserved for optimizing the PAPR instead in the one or more unused subcarrier outside the used band.

4. The method according to claim 1, **characterized by** applying the method to multiple carriers.

5. The method according to claim 1, **characterized in that** the power spectrum density outside the used band is less or equal than a spectrum mask.

6. The method according to claim 1, **characterized in that** a ramping method is used for a soft change over from one symbol to another in the time domain.

7. The method according to claim 1, **characterized in that** before the deriving the difference signal up-sampling the wideband radio signal.

8. The method according to claim 1, **characterized in that** the clipping is performed iteratively.

9. A clipping unit for clipping a wideband radio signal in the time domain at a predefined threshold defining the maximum magnitude of the signal, **characterized by** comprising signal processing means for performing the method of one of the previous claims.

10. The clipping unit according to claim 9, **characterized in that** the signal processing means is a finite impulse response filter.

11. A power amplifier unit, **characterized by** comprising the clipping unit according to claim 10.

12. A network element like a node B, **characterized by** comprising a clipping unit according to claim 11.

```
┌────────────────────────────────┐        ┌──────────────────────────────────────────────┐
│          IFFT                  │───────▶│  Prefixed (and Ramped), Unclipped            │
│   Prefixing & Ramping          │        │           OFDM Symbol                        │
└────────────────────────────────┘        │ (Time Domain, Base Band Sample Rate)         │
            └── 100                         └──────────────────────────────────────────────┘
              ▲                                              │      └── 12
              │                                              ▼
┌────────────────────────────┐            ┌──────────────────────────────────────────────┐
│    OFDM Symbol             │            │      Up-Sampling & Clipping                   │
│ (Subcarriers in the        │            │  EVM Optimization & Clipping                 │
│  Frequency Domain)         │            └──────────────────────────────────────────────┘
└────────────────────────────┘                         └── 200
         └── 10                                            │
                                                           ▼
                                           ┌──────────────────────────────────────────────┐
                                           │ Prefixed (and Ramped), Clipped and           │
                                           │   Up-Sampled OFDM Symbol                      │
                                           │        (Time Domain)                         │
                                           └──────────────────────────────────────────────┘
                                                       └── 15
```

Fig. 1

```
┌─────────────────────┐          ┌──────────┐          ┌─────────────────────┐
│    OFDM Symbol      │          │   IFFT   │          │    OFDM Symbol      │
│ (Subcarriers in the │─────────▶│          │─────────▶│   (Time Domain,     │
│  Frequency Domain)  │          │          │          │ Base Band Sample Rate)│
└─────────────────────┘          └──────────┘          └─────────────────────┘
         └── 10                      └── 110                     └── 11
```

```
┌──────────────────────────────┐          ┌──────────────────────────────┐
│ Prefixed (and Ramped), Unclipped│       │                              │
│         OFDM Symbol           │◀─────────│    Prefixing & Ramping       │
│        (Time Domain,          │          │                              │
│     Base Band Sample rate)    │          └──────────────────────────────┘
└──────────────────────────────┘                      └── 120
              └── 12
```

Fig. 2

Prefixed (and Ramped), Unclipped
OFDM Symbol
(Time Domain, Base Band Sample Rate) — 12

Up-Sampling & Clipping

— 210

Prefixed, Clipped OFDM Symbol
(Time Domain,
Increased Sample Rate)

13

EVM Optimization & Clipping

220

Prefixed, Clipped & EVMF Optimized OFDM Symbol
(Time Domain, Increased Sample Rate)

— 15

Fig. 3

EP 2 383 951 A2

```
┌─────────────────────────────────────────────────┐
│ Prefixed (and Ramped), Unclipped OFDM Symbol    │ ⌐ 12
│ (Time Domain,  Base Band Sample rate)           │
└─────────────────────────────────────────────────┘
                         │
                         ▼
┌─────────────────────────────────────────────────┐
│ Spread signal 12 by zero padding                │ ⌐ 211
│ to reach increased sample rate                  │
└─────────────────────────────────────────────────┘
                         │
                         ▼
              ┌──────────────────┐
              │ Spread Signal 12 │ ⌐ 13
              └──────────────────┘
                         │          ⌐ 212
                         ▼
┌─────────────────────────────────────────┐        ┌──────────────────────┐
│ Convolute all samples of signal 13      │        │ Prefixed, First-Clipped│ ⌐ 14
│ If clipping constraint is violated at   │ ──────▶│  OFDM Symbol          │
│ sample k: Clip it according equ (14)    │        │ (Time Domain,         │
└─────────────────────────────────────────┘        │  Increased Sample Rate)│
                                                    └──────────────────────┘
```

Fig. 4

Prefixed, First-Clipped OFDM Symbol (Time Domain, Increased Sample Rate) $\tilde{s}^{up*}$
Original Signal s

14

1 Calculate the $\gamma^{old}$

2 Calculate the new $\gamma$'s with eq (16)

3 Calculate the hard clipping correction signal $h_c$

4 Calculate the $\delta\gamma$'s

5 Calculate the new "old" $\gamma$'s

6 Repeat step 2 for n iterations

220

Prefixed, Clipped & EVMF Optimized OFDM Symbol
(Time Domain, Increased Sample Rate)

15

Fig. 5

EP 2 383 951 A2

2-FOLD UPSAMPLED SIGNALS BEFORE EVMF OPTIMIZATION

Fig. 6

SUB-CARRIER RANGES (WIMAX 5 MHz Bandwidth/64QAM)

Amplitude (Real Part)

Legend:
— Occupied Sub-Carrier Range
— Occupied plus Unused In-Band Sub-Carrier Range
—·— Original Subcarriers
——·· Subcarriers After Up-Sampling & First Clipping

Sub-Carrier Number (Range Positions: 25   47   467   489)

Fig. 7

EP 2 383 951 A2

TIME DOMAIN IMPAIRMENTS (WIMAX 5 MHz/64 QAM)

Fig. 8

TIME DOMAIN IMPAIRMENTS (WIMAX 5 MHz/64 QAM)

Fig. 9

EP 2 383 951 A2

Fig. 10

FREQUENCY DOMAIN IMPAIRMENTS (WIMAX 5 MHz/64 QAM)

Fig. 11

EP 2 383 951 A2

Mixed Modulation/5 MHz Transmission Bandwidth/421 Sub-carriers
MEAN EVM against PAPR

PAPR [db] ( 6.2574    6.2702    6.2937    6.2674 db PAPR at 2.5 % EVM)

ACLR against PAPR

PAPR [db] (Tclip at 2.5 %:    1.9924    1.9915    2.0063    1.9944)

Fig. 12

EP 2 383 951 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6175551 B
- EP 1195892 A
- EP 02360252 A

**Non-patent literature cited in the description**

- Techniques for Peak Power Reduction in OFDM Systems. **FARNESE, DOMENICO.** Master Thesis Chalmer University of Technology. Academic, 1997